# EUROPEAN PATENT APPLICATION

(11) **EP 1 806 936 A2**
(43) Date of publication of application: **11.07.2007**
(21) Application number: 06125813.3
(22) Date of filing: 11.12.2006
(51) Int. Cl.: H04Q 7/30, H04Q 7/32

(54) **Method and apparatus of neighbor cell management for reducing power consumption in a mobile communication terminal**

(30) Priority: 06.01.2006 KR 20060001575
(71) Applicant: Samsung Electronics Co., Ltd., Suwon-si, Gyeonggi-Do (KR)
(72) Inventor: Sang-Hyun, Lee, Dongdaemun-gu, Seoul (KR)
(74) Representative: Grünecker, Kinkeldey, Stockmair & Schwanhäusser Anwaltssozietät

(57) **Abstract**

An apparatus and a method of neighbor cell management for reducing power consumption in a mobile communication terminal. The method includes determining whether battery power reduces to a threshold value, checking if a number of neighbor cells in a neighbor cell list is equal to or greater than a predetermined number when the battery power reduces to the threshold value, and performing a power saving neighbor cell management mode when the number of neighbor cells in a neighbor cell list is equal to or greater than predetermined number.

## Description

The present invention generally relates to a mobile communication terminal, and in particular, to a method and an apparatus of neighbor cell management for reducing power consumption.

Typically, 2nd generation mobile communication systems providing voice service include Global System for Mobile communications (GSM), Interim Standard (IS)-95 series, etc. The GSM was commercialized around Europe and has provided a service using Time Division Multiple Access (TDMA).

A GSM terminal periodically matches and maintains synchronization with six neighboring cells having the strongest received signal strength among cells that are close and in an idle state. Thereby, for cell reselection, the mobile communication terminal can secure cells for a handover. If the number of neighbor cells is less than six, the mobile communication terminal continuously tries to search for neighbor cells having a higher reception signal level.

However, only one cell is used for a handover. The five cells other than the cell used for the handover are extra cells. Synchronization security for the extra cells causes unnecessary power consumption. Therefore, a need exists to provide an improved method and apparatus for reducing power consumption in neighbor cell management in a mobile communication terminal.

It is the object of the present invention to provide a method of neighbor cell management for reducing power consumption in a mobile communication terminal.

This object is solved by the subject matter of the independent claims.

Preferred embodiments are defined in the dependent claims.

An aspect of the present invention is to provide an apparatus of neighbor cell management for reducing power consumption in a mobile communication terminal.

According to one embodiment of the present invention, for achieving the above object, a method of neighbor cell management in a mobile communication terminal includes determining whether battery power reduces to a threshold value or whether a power saving mode is selected by a user, checking if a number of proximate cells in a neighbor cell list is equal to or greater than a predetermined number when the battery power reduces to the threshold value or when the power saving mode is selected by the user, and performing a power saving neighbor cell management mode when the number of neighbor cells in a neighbor cell list is equal to or greater than the predetermined number.

According to another embodiment of the present invention, for achieving the above object, the mobile communication terminal for neighbor cell management includes a controller for determining whether battery power reduces to a threshold value or whether a power saving mode is selected by a user, checking if a number of neighbor cells in a neighbor cell list is equal to or greater than a predetermined number when the battery power reduces to the threshold value or when the power saving mode is selected by the user, and performing a power saving neighbor cell management mode when the number of neighbor cells in a neighbor cell list is equal to or greater than the predetermined number is provided, wherein said mobile communication terminal has an input means for inputting the power saving mode selection by the user.

The present invention will become more apparent from the following detailed description when taken in conjunction with the accompanying drawings in which:
FIG. 1 illustrates a procedure of neighbor cell management in a mobile communication terminal according to the present invention; and
FIG. 2 illustrates a block diagram of a mobile communication terminal according to the present invention.

Preferred embodiments of the present invention will be described herein below with reference to the accompanying drawings. In the following description, well-known functions or constructions are not described in detail.

Hereinafter, a method and an apparatus of neighbor cell management for reducing power consumption in a mobile communication terminal will be described.

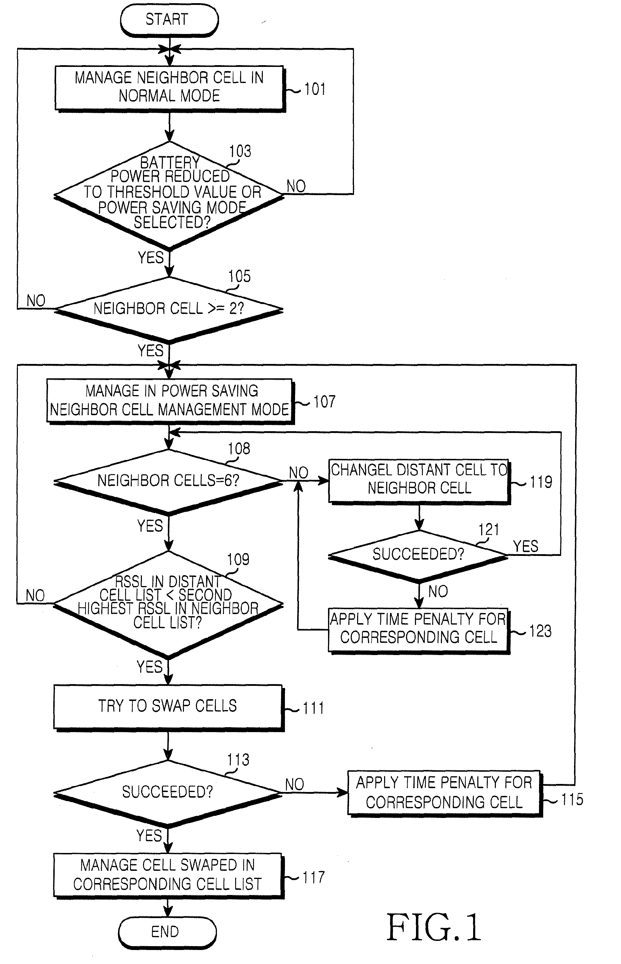

FIG. 1 illustrates a procedure of neighbor cell management in a mobile communication terminal according to the present invention. In step 101 a mobile communication terminal manages neighbor cells in a normal mode. Neighbor cell management in a normal mode is implemented as follows.

The mobile communication terminal periodically monitors system information received from a network. The system information includes a list of neighbor cells. The information of the neighbor cell list is received via network when power is turned on in a mobile communication terminal or when the neighbor cell is updated. The information of the neighbor cell list includes Base Station Identity Code (BSIC) and Absolute Radio Frequency Channel number (ARFCN). After receiving the information of the neighbor cell list, the mobile communication terminal scans the neighbor cells periodically according to the received information of the neighbor cell list, thereby measuring received signal strength of the neighbor cells.

Then, the mobile communication terminal sorts the neighbor cells according to a Received Signal Strength Level (RSSL). The mobile communication terminal selects six neighbor cells having a highest RSSL among the sorted neighbor cells and manages the selected six neighbor cells as a neighbor cell list. Neighbor cells other than the selected six neighbor cells are managed as a distant cell list. The mobile communication terminal synchronizes with the neighbor cells in an order of the highest RSSL, periodically, for example, at 10 second intervals.

In step 103, the mobile communication terminal checks if battery power reduces to a threshold value or a power saving mode is selected by a user's key input. The threshold value is a reference value that determines when a neighbor cell management mode is changed from a normal neighbor cell management mode to a power saving neighbor cell management mode. The threshold value may be 3.57V. If the battery power does not reach the threshold value and the power saving mode is not selected in step 103, the mobile communication terminal returns to step 101 to manage neighbor cells in the normal neighbor cell management mode. If battery power reduces to the threshold value or the power saving mode is selected, the mobile communication terminal checks whether the number of the neighbor cells is equal to or greater than the predetermined number, preferably two, in step 105. If the number of the neighbor cells is less than two in step 105, the mobile communication terminal returns to step 101 to manage neighbor cells in the normal mode.

If the number of the neighbor cells is equal to or greater than two, the mobile communication terminal changes the neighbor cell management mode from the normal neighbor cell management mode to the power saving neighbor cell management mode in step 107. The power saving neighbor cell management mode is implemented by acquiring synchronization with the upper two neighbor cells which have the highest RSSL, for the same time period as the normal mode, for example, at 10 second intervals. Also, acquiring synchronization with the remaining four neighbor cells is performed for a longer period than the upper two neighbor cells. The remaining four neighbor cells, which are a third or sixth neighbor cell among the six neighbor cells, have sequential time period. For example, the time period of the third neighbor cell is 12 seconds, the fourth is 16 seconds, the fifth is 20 seconds and the sixth is 24 seconds, respectively.

Next, the mobile communication terminal checks whether the number of the neighbor cells is a number of originally set neighbor cells in the neighbor cell list, for example six, in step 108. If the number of the neighbor cells is not six, the mobile communication terminal changes a distant cell having the highest RSSL among the distant cell list to the neighbor cell list in step 119. In step 121, the mobile communication terminal checks whether the change has succeeded. If the change has failed, the mobile communication terminal applies a time penalty to a corresponding cell in step 123 and returns to step 119 to change a distant cell with the highest RSSL among the distant cell list to the neighbor cell list. The time penalty is a time period for which the cell will not be selected again. If the change has succeeded, the mobile communication terminal returns to step 108.

If the number of the neighbor cells is six, the mobile communication terminal monitors whether there is a cell among the distant cell list having a higher RSSL than the RSSL of the second highest RSSL neighbor cell among the neighbor cell list in step 109. If there is no such a cell among the distant cell list, the mobile communication terminal returns to step 107. If there is such a cell among the distant cell list, the mobile communication terminal tries to swap the second highest RSSL neighbor cell among the neighbor cell list with the corresponding distant cell in step 111.

Next in step 113, the mobile communication terminal checks whether the swapping of the neighbor cell with the distant cell has succeeded. If the swapping has failed, the mobile communication terminal applies a time penalty to a corresponding distant cell in step 115 and returns to step 107. The time penalty is a time period for which the cell will not be selected again. The time penalty may be assigned depending on the number of the neighbor cells. For example, if the mobile communication terminal assigns a 5 seconds time penalty when there is one neighbor cell, the mobile communication terminal assigns a 20 seconds time penalty if there are four neighbor cells. The time penalty may not be canceled.

If the swapping has succeeded, the swapped distant cell is included and managed in the neighbor cell list.

After this, the mobile communication terminal ends the process.

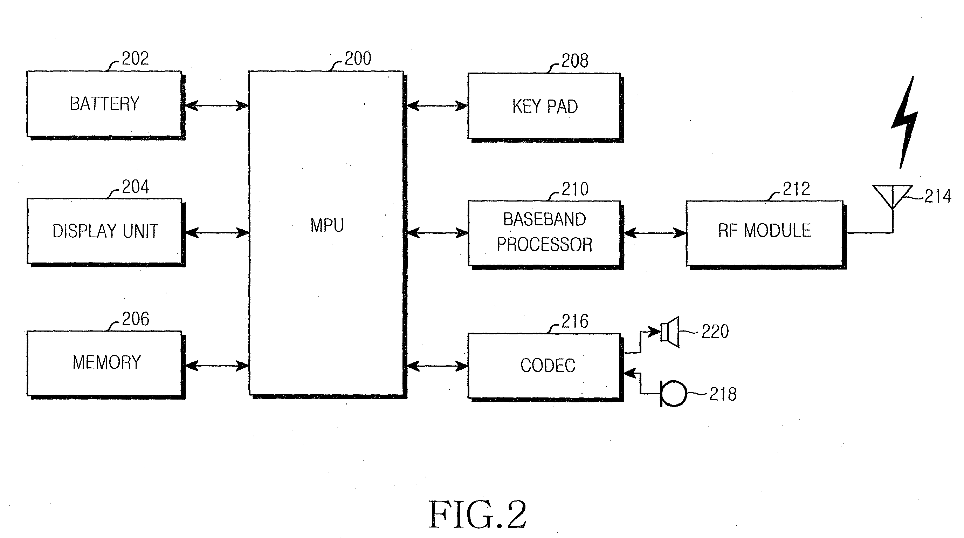

FIG. 2 shows a mobile communication terminal according to the present invention. A Micro-Processor Unit (MPU) 200, acting as a controller, controls an overall operation of the mobile communication terminal. For example, the MPU 200 is responsible for processing and controlling voice communication and data communication. In addition to typical functions, the MPU 200 processes functions for managing neighbor cells in a power saving mode according to the number of neighbor cells when battery power reduces to a threshold value or selection of the power saving mode by a user is sensed. A detailed description of the typical processing and controlling operation of the MPU 200 is understood by those skilled in the art and will not be further described.

Memory 206 includes, but is not limited to, Read Only Memory (ROM), Random Access Memory (RAM), and flash RAM. A Read Only Memory (ROM) stores software for processing and controlling the MPU 200 and all reference data, and, in particular, for managing neighbor cells in the power saving mode according to the number of neighbor cells. A Random Access Memory (RAM), which is a working memory of the MPU, stores temporary data being generated while performing all software. A flash RAM stores various updatable data to be kept.

A key pad 208 includes numeric keys of digits 0-9 and a plurality of function keys, such as a MENU key, a CANCEL (REMOVE) key, an ENTER key, a TALK key, an END key, an Internet connection key, navigation (directional) keys (▲/▼/◄/►), etc. The key input data corresponding to a key pressed by the user is provided to the MPU 200. A display unit 204 displays status information, a number of characters, moving pictures, still pictures and the like. The display unit 204 may be a color LCD (Liquid Crystal Display).

A Coder-Decoder (CODEC) 216 connected to the MPU 200, a microphone 218, and a speaker 220 connected to the CODEC 216 are audio input/output blocks for use in telephone calls and voice recording. The MPU 200 produces Pulse Code Modulation (PCM) data and the CODEC 216 converts the PCM data into analog audio signals. The analog audio signals are output through the speaker 220. Also, the CODEC 216 converts analog audio signals received through the microphone 218 into PCM data and provides the PCM data to the MPU 200.

Radio Frequency (RF) unit 212 down converts a frequency of an RF signal received through an antenna 214 and provides the down converted RF signal to a baseband processor 210. Also, the RF unit 212 up converts a frequency of a baseband signal provided from the baseband processor 210, and transmits the up converted baseband signals through the antenna 214. The baseband processor 210 processes the baseband signals which are transmitted/received between the RF unit 212 and the MPU 200. For example, for data transmission, the baseband processor 210 performs channel coding and spreading transmitting data. For data reception, the baseband processor 210 performs despreading and channel decoding for reception data.

A mobile communication terminal for neighbor cell management includes an MPU 200, acting as a controller, for determining whether battery power reduces to a threshold value, checking if the number of neighbor cells in a neighbor cell list is equal to or greater than predetermined number when the battery power reduces to the threshold value and performing a power saving neighbor cell management mode when the number of neighbor cells in a neighbor cell list is equal to or greater than a predetermined number. The MPU performs a normal neighbor cell management mode when the number of neighbor cells in a neighbor cell list is less than the predetermined number. The mobile communication terminal can be a GSM mobile communication terminal and the predetermined number can be two.

The power saving neighbor cell management mode means that a number of cells among the neighbor cells have a longer synchronous acquisition period. The number of cells of the neighbor cells are selected in the order of the lower Received Signal Strength Level (RSSL). The MPU checks if the number of neighbor cells in a neighbor cell list is equal to the number of originally set neighbor cells in the neighbor cell list, and monitors whether there is a cell among the distant cell list having a higher RSSL than the RSSL of the second highest RSSL neighbor cell among the neighbor cell list when the number of the neighbor cells is equal to the number of originally set neighbor cells in the neighbor cell list.

The MPU further performs the steps of changing a distant cell having the highest RSSL among the distant cell list to the neighbor cell when the number of neighbor cells is less than the number of originally set neighbor cells in the neighbor cell list.

Also, a mobile communication terminal for neighbor cell management includes an input means, a key pad 208, for inputting a power saving mode selection by a user and a controller determining whether the power saving mode is input by the user, checking if the number of neighbor cells in a neighbor cell list is equal to or greater than predetermined number when the power saving mode is selected by the user, and performing a power saving neighbor cell management mode when the number of neighbor cells in a neighbor cell list is equal to or greater than predetermined number.

As described above, neighbor cells are managed according to the number of neighbor cells in a mobile communication terminal. Upon operation in a power saving mode, it is possible to reduce power consumption and ensure long battery life. When the remaining battery power is under the threshold value or a power saving mode is selected by a user, neighbor cells management in the power saving mode according to the present invention extends the battery life.

While the present invention has been shown and described with reference to certain preferred embodiments thereof, it will be understood by those skilled in the art that various changes in form and details may be made therein without departing from the scope of the present invention as defined by the appended claims.

## Claims

1. A method of neighbor cell management in a mobile communication terminal, comprising the steps of:
determining whether battery power reduces to a threshold value;
checking if a number of neighbor cells in a neighbor cell list is equal to or greater than a predetermined number when the battery power reduces to the threshold value; and
performing a power saving neighbor cell management mode when the number of neighbor cells in a neighbor cell list is equal to or greater than the predetermined number.

2. The method of claim 1, further comprising performing a normal neighbor cell management mode when the number of neighbor cells in the neighbor cell list is less than the predetermined number.

3. The method of claim 1 or 2, wherein the threshold value of the battery power is 3.57V.

4. The method of one of claims 1 to 3, wherein the mobile communication terminal is a GSM mobile communication terminal and the predetermined number is two.

5. The method of one of claims 1 to 4, wherein the power saving neighbor cell management mode means that a number of cells among the neighbor cells have a longer synchronous acquisition period.

6. The method of claim 5, wherein the number of cells of the neighbor cells are selected in an order of a lower received signal strength level.

7. The method of one of claims 1 to 6, further comprising:
checking if the number of neighbor cells in a neighbor cell list is equal to a number of originally set neighbor cells in the neighbor cell list;
monitoring whether there is a cell among a distant cell list having a higher received signal strength level than the received signal strength level of a second highest received signal strength level neighbor cell among the neighbor cell list when the number of the neighbor cells is equal to the number of originally set neighbor cells in the neighbor cell list.

8. The method of claim 7, further comprising:
changing a distant cell having a highest received signal strength level among the distant cell list to the neighbor cell list when the number of neighbor cells is less than the number of originally set neighbor cells in the neighbor cell list.

9. The method of claim 7, further comprising:
swapping a second highest received signal strength level neighbor cell among the neighbor cell list with a cell among a distant cell list having a higher received signal strength level than the received signal strength level of the second highest received signal strength level neighbor cell when a second highest received signal strength level neighbor cell is among the neighbor cell list with the cell among the distant cell list having a higher received signal strength level than the received signal strength level of the second highest received signal strength level neighbor cell.

10. A method of neighbor cell management in a mobile communication terminal, comprising the steps of:
determining whether a power saving mode is selected by a user;
checking if a number of neighbor cells in a neighbor cell list is equal to or greater than a predetermined number when the power saving mode is selected by the user; and
performing a power saving neighbor cell management mode when the number of neighbor cells in a neighbor cell list is equal to or greater than the predetermined number.

11. The method of claim 10, wherein the power saving neighbor cell management mode means that a number of cells among the neighbor cells have a longer synchronous acquisition period.

12. A mobile communication terminal for neighbor cell management comprising:
a controller for determining whether battery power reduces to a threshold value, checking if a number of neighbor cells in a neighbor cell list is equal to or greater than a predetermined number when the battery power reduces to the threshold value, and performing a power saving neighbor cell management mode when the number of neighbor cells in the neighbor cell list is equal to or greater than the predetermined number.

13. The mobile communication terminal of claim 12, wherein the controller performs a normal neighbor cell management mode when the number of neighbor cells in the neighbor cell list is less than the predetermined number.

14. The mobile communication terminal of claim 12 or 13, wherein the mobile communication terminal is a GSM mobile communication terminal and the predetermined number is two.

15. The mobile communication terminal of one of claims 12 to 14, wherein the power saving neighbor cell management mode means that a number of cells among the neighbor cells have a longer synchronous acquisition period.

16. The mobile communication terminal of claim 15, wherein the number cells of the neighbor cells are selected in an order of a lower received signal strength level.

17. The mobile communication terminal of one of claims 12 to 16, wherein the controller checks if the number of neighbor cells in the neighbor cell list is equal to a number of originally set neighbor cells in the neighbor cell list, and monitors whether there is a cell among a distant cell list having a higher received signal strength level than the received signal strength level of a second highest received signal strength level neighbor cell among the neighbor cell list when the number of the neighbor cells is equal to the number of originally set neighbor cells in the neighbor cell list.

18. The mobile communication terminal of claim 17, wherein the controller changes a distant cell having a highest received signal strength level among the distant cell list to the neighbor cell list when the number of the neighbor cells is less than the number of originally set neighbor cells in the neighbor cell list.

19. A mobile communication terminal for neighbor cell management comprising:
an input means for inputting a power saving mode selection by a user; and
a controller determining whether a power saving mode is input by the user, checking if a number of neighbor cells in a neighbor cell list is equal to or greater than a predetermined number when the power saving mode is selected by the user, and performing a power saving neighbor cell management mode when the number of neighbor cells in a neighbor cell list is equal to or greater than the predetermined number.

20. The mobile communication terminal of claim 19, wherein the power saving neighbor cell management mode means that a number of cells among the neighbor cells have a longer synchronous acquisition period.
